# FASCICULE DE BREVET EUROPEEN

(11) **EP 0 471 611 B1**
(45) Date de publication et mention de la délivrance du brevet: **27.03.1996**
(21) Numéro de dépôt: 91402211.6
(22) Date de dépôt: 08.08.1991
(51) Int. Cl.: B65B 25/06, B65D 85/50, A01K 63/02

(54) **Procédé de traitement et de conservation de mollusques bivalve à l'état vivant et emballage destiné à la mise en oeuvre du procédé**
Behandlungs- und Konservierungsverfahren von lebenden zweischaligen Mollusken und Verpackung, die geeignet ist für dieses Verfahren
Method for treating and preserving live bivalve molluscs and packing adapted for use with the method

(30) Priorité: 08.08.1990 FR 9010136
(43) Date de publication de la demande: 19.02.1992
(73) Titulaire: AQUA BIOTIQUE CONTAINERS, F-94480 Ablon (FR)
(72) Inventeur: Beghini, Gino, F-14450 Grandcamp Maisy (FR)
(74) Mandataire: Moncheny, Michel

(56) Documents cités:
- BE-A- 368 420
- FR-A- 1 440 851
- US-A- 2 316 607
- US-A- 2 563 364
- US-A- 2 652 807

## Description

La présente invention concerne le traitement et la conservation de mollusques bivalves vivants, notamment huîtres, palourdes ou autres.

Ces mollusques possèdent une coquille délimitant une cavité dans laquelle est retenue de l'eau constituant l'élément nécessaire à la vie du mollusque, l'eau étant régulièrement renouvelée lorsque le mollusque est situé dans ce milieu aquatique naturel par entrebaillement de la coquille.

Lorsque l'eau n'est pas renouvelée, les excréments contenus dans la coquille provoquent la pollution de l'eau, en particulier par des coliformes fécaux, ce qui rend le mollusque inapte à sa consommation.

De plus, si l'absence de renouvellement d'eau se prolonge, le mollusque meurt.

Ces phénomènes posent des problèmes de traitement des coliformes fécaux, lors du transport et de la conservation de tels mollusques.

Actuellement les mollusques tels que les huîtres, sont transportés et stockés dans des cagettes par exemple, c'est-à-dire un emballage léger à claire-voie monté par agrafage, à section horizontale perpendiculaire pour pouvoir être gerbé et à section verticale rectangulaire ou trapézoïdale pour être emboîté à vide.

Avec un tel procédé de conservation pour le transport, les mollusques, et par exemple les huîtres, peuvent rester vivants pendant environ quinze jours. Cependant l'eau contenue à l'emballage dans les coquilles d'huîtres n'est pas renouvelée, ce qui entraîne une augmentation des coliformes contenus dans l'huître, c'est-à-dire une pollution risquant à terme, de les rendre dangereux à la consommation.

Pour remédier à cet inconvénient, l'invention a pour but de fournir un procédé de traitement et de conservation de mollusques bivalves vivants permettant une commercialisation plus facile en garantissant qu'ils sont sans danger pour le consommateur et en accroissant leur durée de vie en dehors de leur milieu naturel ou de leur milieu d'élevage. Ce but est atteint par le procédé selon la revendication 1.

A l'inverse US-2 316 607 décrit un procédé permettant le stockage et le transport de homards vivants dans un récipient fermé. Selon ce procédé un homard vivant est placé dans un récipient et recouvert d'eau, un espace étant réservé au-dessus de l'eau pour l'introduction d'oxygène. Un mode de réalisation particulier illustre la mise en place d'une atmosphère enrichie en oxygène par déplacement de l'air initialement contenu dans le récipient par balayage au moyen d'oxygène.

US-2 652 807 décrit un dispositif fermé destiné au transport et au stockage de poissons vivants à l'exclusion de crustacés. Selon ce document il est nécessaire d'ajouter à l'eau du récipient des substances chimiques absorbantes ou physiologiquement actives.

Grâce au procédé inventif on constate, lors du stockage, une réduction importante de la pollution interne des mollusques, le procédé permettant en fait d'effectuer un traitement bactéricide de l'eau.

Selon d'autres caractéristiques :
- le gaz est de l'oxygène ;
- le gaz est de l'ozone ;
- le remplacement de l'air par un gaz de composition contrôlée est effectué à travers une soupape bidirectionnelle commandée prévue dans une partie de paroi de l'emballage et normalement sollicitée vers sa position fermée ;
- le procédé consiste en outre à stocker éventuellement les emballages fermés en milieu réfrigéré ;
- le procédé comporte une ou plusieurs étapes de renouvellement du gaz contenu dans l'espace supérieur ;
- un aliment destiné à la nourriture du mollusque est également introduit dans l'emballage ouvert lors de l'étape A).

L'invention a également pour objet un emballage destiné à la mise en oeuvre du procédé.

L'invention va être décrite plus en détail ci-après en se référant aux dessins annexés, donnés uniquement à titre d'exemple et sur lesquels :
- La figure 1 est une perspective éclatée avec arrachement partiel d'un emballage destiné à la mise en oeuvre du procédé selon l'invention ;
- la figure 2 est une vue schématique d'un emballage fermé après mise en oeuvre du procédé selon l'invention.

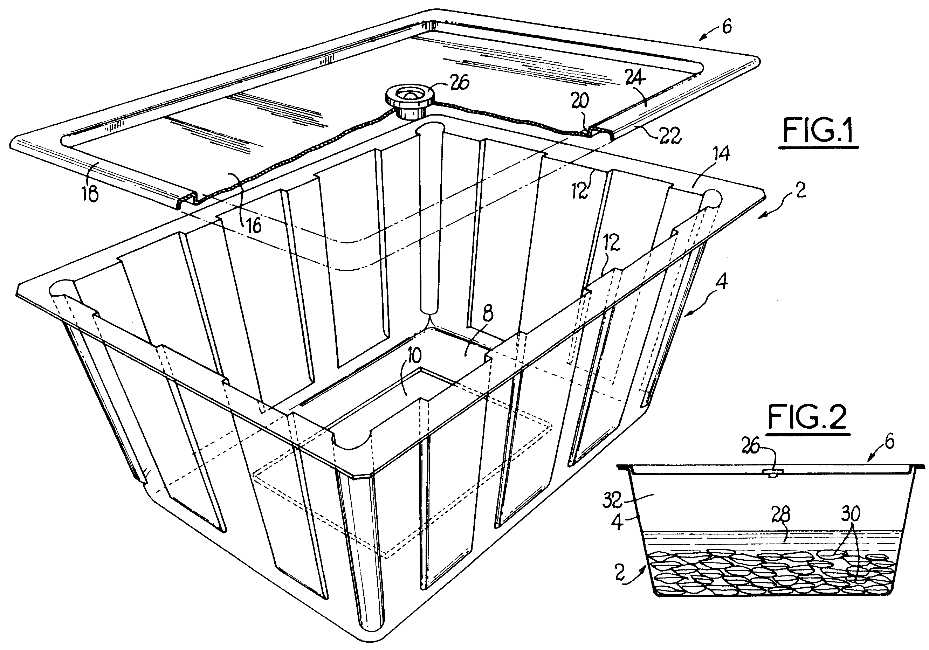

Pour la mise en oeuvre du procédé selon l'invention, on a utilisé un emballage 2 tel que représenté sur les figures 1 et 2.

Sur la figure 1 l'emballage 2 comporte une partie formant récipient ouvert 4 et un couvercle 6.

Le récipient 4 et le couvercle 6 sont réalisés en matière plastique transparente, qui doit être étanche à l'eau et au gaz.

Il est à noter que le récipient et le couvercle peuvent être réalisés en tout autre matériau, pourvu qu'il soit étanche à l'eau et au gaz, et que la mise en place du couvercle sur le récipient 4 soit effectuée de manière à assurer l'étanchéité à l'eau et à l'air de la fermeture.

Le récipient 4 comporte un fond rectangulaire 8 dont la face extérieure est pourvue d'un logement rectangulaire 10.

Les côtés du récipient 4 comportent des nervures 12 destinées à accroître la rigidité des côtés.

La face supérieure ouverte du récipient 4 comporte un rebord 14 horizontal faisant saillie vers l'extérieur du récipient 4.

Le couvercle 6 comporte une partie rectangulaire plane 16 destinée à venir obturer la face supérieure ouverte du récipient 4.

Les bords de la partie 16 comportent un rebord 18 s'étendant vers l'extérieur, destinés à venir recouvrir le rebord 14 du récipient 4.

A cet effet le rebord 18 possède une forme de U renversé dont une première aile 20 est destinée à venir en contact avec les côtés du récipient 4 et une seconde aile 22 destinée à venir en contact avec l'extrémité extérieure du rebord 14 du récipient 4.

Le fond 24 du U est destiné à venir en contact avec la partie horizontale du rebord 14.

La partie plane 16 du couvercle 6 comporte une soupape commandée bidirectionnelle 26.

La soupape 26 est agencée dans une zone de la partie 16 qui, lorsque le couvercle 6 est agencé sur le récipient 4, est située à la verticale du logement 10 du récipient 4.

Cet agencement permet de superposer deux emballages, la partie de soupape 26 faisant saillie à l'extérieur se trouvant alors située dans le logement 10 du récipient situé au-dessus.

Pour la mise en oeuvre du procédé de conservation selon l'invention à l'aide d'un récipient du type décrit ci-dessus, on remplit partiellement le récipient 4 à l'aide d'eau 28 (voir figure 2) puis on introduit un ou plusieurs mollusques 30 de manière à ce que le récipient 4 présente à sa partie supérieure un espace 32 contenant de l'air.

On peut ajouter à l'eau du récipient au moins un produit constituant un aliment adapté pour la nourriture du mollusque vivant.

Ensuite le couvercle 6 est positionné dans l'ouverture du récipient 4 et le rebord 18 du couvercle est thermosoudé sur le rebord 14 du récipient 4 de manière à obtenir un récipient fermé étanche à l'eau et à l'air.

A l'aide de la soupape 26 on extrait l'air contenu dans l'espace 32 puis on introduit un gaz de composition contrôlée tel que de l'oxygène.

Le gaz de composition contrôlée peut être un mélange d'au moins deux gaz dont l'un servira à oxygèner l'eau, l'oxygène constituant un bactéricide.

Dans le cadre d'essais avec de l'oxygène, des emballages 2 tels que décrits ci-dessus comportant 3 kilos d'huîtres et 1 kilo 850 d'eau de mer ont été stockés dans une chambre froide à 5°C.

Il est à noter que lors de ces essais l'oxygène contenu dans l'emballage n'a pas été renouvelé alors qu'avec l'emballage utilisé, il est possible par l'intermédiaire de la soupape 26 d'extraire le gaz contenu dans l'emballage et d'y introduire à nouveau de l'oxygène "neuf".

Lors du conditionnement, il a été constaté que les coliformes totaux contenus dans les huîtres étaient de 1440.

Les mesures effectuées lors de la conservation ont permis d'obtenir les résultats suivants :
- après 7 jours : présence de 250 coliformes totaux
- après 14 jours : présence de 55 coliformes totaux
- après 21 jours : présence de 84 coliformes totaux
- après 28 jours : présence de 55 coliformes totaux
On constate ainsi que grâce au procédé selon l'invention, la pollution des mollusques est plus faible que celle existant lors du conditionnement de ceux-ci.

Après une période d'environ 14 jours, on constate une stabilisation des coliformes totaux à un taux nettement inférieur au taux initial, ce qui leur confère une meilleure garantie, en particulier lorsqu'ils sont consommés vivants.

Ces essais ont permis de constater qu'après 28 jours les huîtres étaient non seulement vivantes, et pouvaient donc être commercialisées à l'air libre mais étaient en outre moins polluées que lors de leur conditionnement.

En d'autre termes, les essais ont permis de constater qu'en traitant les huîtres vivantes à l'aide d'oxygène par mise en oeuvre du procédé de conservation selon l'invention, il est possible de conserver ces huîtres pendant 4 semaines sans nuire à leur qualité et en permettant ensuite de les commercialiser en les conservant à l'air libre selon les usages actuels pendant environ 15 jours dans un endroit frais.

Il est à noter que des essais ont été également effectués avec de l'ozone et que les résultats sont très satisfaisants.

## Revendications

1. Procédé de conservation et de traitement de mollusques bivalves vivants dans un emballage fermé comportant une partie formant corps creux ouvert (4), une autre partie formant couvercle (6), thermosoudable sur le corps creux, ledit emballage étant muni d'un moyen d'introduction de gaz et d'un moyen d'expulsion de l'air, et ledit procédé comprenant les étapes consistant à
A) remplir partiellement la partie formant corps creux (4), de dimension adaptée, avec de l'eau, notamment de l'eau provenant du milieu naturel ou d'élevage des mollusques, le niveau de l'eau étant tel que l'emballage comporte à sa partie supérieure un espace (32) contenant de l'air;
B) mettre au moins un mollusque bivalve vivant (30) dans l'eau contenue dans ladite partie formant corps creux (4), et
C) remplacer l'air contenu dans l'emballage par un gaz de composition contrôlée par l'intermédiaire des moyens d'introduction de gaz et d'expulsion de l'air, ledit procédé étant caractérisé en ce que l'on effectue, après l'étape B), les étapes suivantes consistant à :
D) fermer l'emballage de manière étanche à l'eau et au gaz à l'aide dudit couvercle (6),
E) extraire l'air contenu dans l'emballage fermé par l'intermédiaire d'une soupape bidirectionnelle commandée prévue dans une paroi dudit emballage et fonctionnant comme moyens d'introduction de gaz et d'expulsion de l'air (26), puis
F) introduire dans l'emballage fermé, un gaz de composition contrôlée choisi parmi l'oxygène et l'ozone par l'intermédiaire de ladite soupape.

2. Procédé selon la revendication 1, caractérisé en ce que le gaz est de l'oxygène.

3. Procédé selon la revendication 1, caractérisé en ce que le gaz est de l'ozone.

4. Procédé selon l'une quelconque des revendications précédentes, caractérisé en ce qu'il consiste en outre à stocker les emballages fermés en milieu réfrigéré.

5. Procédé selon la revendication 1, caractérisé en ce qu'il comporte en outre une ou plusieurs étapes de renouvellement du gaz contenu dans ledit espace.

6. Procédé selon l'une quelconque des revendications précédentes, caractérisé en ce qu'un aliment destiné à la nourriture du mollusque est également introduit dans l'emballage ouvert à l'étape A).

7. Emballage destiné à la mise en oeuvre du procédé selon l'une quelconque des revendications précédentes, comportant une partie formant corps creux ouvert (4) en matière plastique, une autre partie formant couvercle (6) thermosoudable sur le corps creux et une soupape située dans le couvercle caractérisé en ce que la soupape est de type bidirectionnelle commandée (26).

8. Emballage selon la revendication 7, caractérisé en ce que la matière plastique est transparente.

## Claims

1. Process for preserving and treating live bivalve molluscs in a closed container having a part forming an open hollow body (4), another part forming a lid (6) which may be thermo-welded to the hollow body, said container being provided with means for introducing gas and means for expelling air, said process comprising the steps of
A) partially filling the suitably sized part which forms the hollow body (4) with water, particularly water from the natural or breeding environment of the molluscs, the level of the water being such that the container has a space (32) it its upper end containing air;
B) placing at least one live bivalve mollusc (30) in the water contained in said part which forms a hollow body (4), and
C) replacing the air contained in the container with a gas the composition of which is controlled using the means for introducing gas and expelling air, said process being characterised in that, after step B), the following steps are carried out, consisting of:
D) sealing the container in watertight and gastight manner using said lid (6),
B) extracting the air contained in the sealed container by means of a controlled two-way valve provided in a wall of said container and acting as the means for introducing gases band expelling air (26), then
F) introducing a gas of controlled composition selected from oxygen and ozone into the sealed container through said valve.

2. Process according to claim 1, characterised in that the gas is oxygen.

3. Process according to claim 1, characterised in that the gas is ozone.

4. Process according to any one of the preceding claims, characterised in that it further consists in storing the sealed containers in refrigerated surroundings.

5. Process according to claim 1, characterised in that it further comprises one or more steps of renewing the gas contained in said space

6. Process according to any one of the preceding claims, characterised in that food intended for feeding the mollusc is also introduced into the open container in step A).

7. Container intended for implementing the process according to any one of the preceding claims, comprising a part made of plastics forming an open hollow body (4), another part forming a lid (6) which can be thermo-welded to the hollow body and a valve located in the lid, characterised in that the valve is a controlled two-way-type valve (26).

8. Container according to claim 7, characterised in that the plastics material is transparent.

## Patentansprüche

1. Verfahren zur Konservierung und Behandlung lebender zweischaliger Mollusken in einer geschlossenen Verpackung, die einen Teil aufweist, der einen offenen Hohlkörper (4) bildet, einen anderen, einen Deckel (6) darstellenden Teil, der auf den Hohlkörper warmgeschweißt werden kann, wobei die genennte Verpackung mit einem Mittel zum Einlassen von Gas und einem Mittel zum Ausstoßen der Luft versehen ist und das genannte Verfahren die Schritte umfaßt, die darin bestehen,
A) den einen Hohlkörper (4) geeigneter Größe bildenden Teil teilweise mit Wasser zu füllen, insbesondere mit Wasser aus dem natürlichen Milieu oder dem Aufzuchtmilieu der Mollusken, wobei der Wasserstand derart gewählt wird, daß die Verpackung in ihrem oberen Teil einen luftgefüllten Raum (32) aufweist,
B) mindestens eine lebende zweischalige Molluske (30) in das Wasser zu legen, das sich in diesem einen Hohlkörper (4) bildenden Teil befindet, und
C) die in der Verpackung enthaltene Luft mittels der Mittel zum Einlassen von Gas und zum Ausstoßen der Luft durch ein Gas kontrollierter Zusammensetzung zu ersetzen, wobei das genannte Verfahren dadurch gekennzeichnet ist, daß nach dem Schritt B) die folgenden Schritte ausgeführt werden, die darin bestehen.
D) die Verpackung mit Hilfe des Deckels (6) wasser- und gasdicht zu verschließen,
E) die in der geschlossenen Verpackung enthaltene Luft durch ein einstellbares Zweirichtungsventil zu entnehmen, das in einer Wand dieser Verpackung vorgesehen ist und als Mittel zum Einlassen von Gas und zum Ausstoßen der Luft (26) arbeitet, und danach
F) mittels des genannten Ventils ein Gas kontrollierter Zusammensetzung, das unter Sauerstoff und Ozon ausgewählt ist, in die geschlossene Verpackung einzulassen.

2. Verfahren nach Patentanspruch 1, dadurch gekennzeichnet, daß die Gas Sauerstoff ist.

3. Verfahren nach Patentanspruch 1, dadurch gekennzeichnet, daß das Gas Ozon ist.

4. Verfahren nach irgendeinem der vorangehenden Patentansprüche, dadurch gekennzeichnet, daß es darüber hinaus darin besteht, die geschlossenen Verpackungen in gekühlter Umgebung aufzubewahren.

5. Verfahren nach Patentanspruch 1, dadurch gekennzeichnet, daß es außerdem einen oder mehrere Schritte der Erneuerung des im genannten Raum enthaltener Gases umfaßt.

6. Verfahren nach irgendeinem der vorangehenden Patentansprüche, dadurch gekennzeichnet, daß auch ein Nahrungsmittel, das zur Ernährung der Molluske bestimmt ist, Im Schritt A) in die offene Verpackung eingeführt wird.

7. Verpackung für die Anwendung des Verfahrens nach irgendeinem dar vorangehenden Patentansprüche, einen einen offenen Hohlkörper (4) bildenden Teil aus Kunststoff aufweisend, einen anderen, einen Deckel (6) bildenden Teil, der auf den Hohlkörper warmgeschweißt werden kann, und ein im Deckel befindliches Ventil, dadurch gekennzeichnet, daß das Ventil vom Typ einstellbares Zweirichtungsventil (26) ist.

8. Verpackung nach Patentanspruch 7, dadurch gekennzeichnet, daß dar Kunststoff transparent ist.
